# EUROPEAN PATENT SPECIFICATION

(11) **EP 0 868 083 B1**
(45) Date of publication and mention of the grant of the patent: **29.10.2003**
(21) Application number: 98200842.7
(22) Date of filing: 17.03.1998
(51) Int. Cl.: H04N 7/16

(54) **Digital television system**
Digitales Fernsehsystem
Système de télévision numérique

(30) Priority: 26.03.1997 NL 1005642
(43) Date of publication of application: 30.09.1998
(73) Proprietor: Irdeto Access B.V., 2132 HD Hoofddorp (NL)
(72) Inventor: Mooij, Wilhelmus Gerardus Petrus, 1115 DK Duivendrecht (NL)
(74) Representative: de Vries, Johannes Hendrik Fokke

(56) References cited:
- WO-A-96/22633
- US-A- 5 461 674
- US-A- 5 590 202
- J.L. GIACHETTI ET AL: "A COMMON CONDITIONAL ACCESS INTERFACE FOR DIGITAL VIDEO BROADCASTING DECODERS" IEEE TRANSACTIONS ON CONSUMER ELECTRONICS, vol. 41, no. 3, August 1996, NEW YORK, NY, US, pages 836-841, XP000539543
- KAYS R: "ENDGERATE FUR INTERAKTIVE VIDEO- UND MULTIMEDIA-DIENSTE" RADIO FERNSEHEN ELEKTRONIK, vol. 45, no. 2, 1 February 1996, pages 53-56, XP000583083

## Description

The invention relates to a digital television system according to the preamble of claim 1.

Systems of this kind are being developed at the moment, wherein the bus is known as "high-performance serial bus", as laid down in International Standard P1394. The decoder of such a television system may or may not be built into the television itself. In order to enable the use of pay television and the like, the decoder or the television must be capable of cooperation with a so-called conditional access module or CA module, which is capable of decoding encoded digital television signals by means of keys which are stored in a smart card, for example. In the usual television systems the decoder is provided with a connector, to which the CA module is to be connected. If the decoder is built into the television, it is also possible to provide the television with a connector for the CA module. Further systems are known, wherein the CA module is built into the television or into the decoder. Known television systems of this kind have several drawbacks. Providing a special connector for the CA module increases the production costs of the decoder or the television. In addition, the system is not very flexible, since only one or a fixed number of CA modules can be connected to the decoder or to the television. Furthermore, said CA module is only capable of cooperation with the television or the decoder to which it is connected.

J.L. Giachetti *et al.:* 'A Common Conditional Access Interface for Digital Video Broadcasting Decoders', *IEEE transactions on consumer electronics,* 41 (3), _August 1996, NY, pages 836-841, discloses a digital television system according to the preamble of claim 1. Decoder manufacturers will provide DVB decoders with the DVB common interface and CA system providers will provide detachable CA modules. A standard TV decoder receives and decodes broadcast TV and radio programmes. The basic elements of this decoder are the modulator, the demultiplexer and the video and audio decoders. When CA is applied, the decoder uses a descrambler, which descrambles the elementary streams and a CA system (CASS), which controls and manages the entitlements of the customers. The interface is located between the demodulator and the descrambler/CASS. This means that the whole bit stream output by the demodulator is sent to a detachable module that performs the descrambling operation of the selected programme and runs the complete CASS functionalities. The DVB common interface described in that paper has been specified for the purpose of allowing the reception of DVB programmes using different CA systems with a single decoder. The CA module is only capable of cooperation with the television or the decoder to which it is connected.

The object of the invention is to provide an improved digital television system of the above kind.

In order to accomplish that objective the digital television system according to the invention is characterized in that the CA module is connected to said bus, wherein the communication between the signal source, the CA module and the television or the decoder takes place via said bus.

In this manner it is achieved that communication between the CA module and the television or the decoder is possible without providing the television or the decoder with a built-in CA module or with a special connector. In addition, a flexible television system is obtained, in that two or more CA modules can be connected to the bus, and each CA module can be used by several signal sources and/or decoders. Depending on the user's requirements, the decoder or the television uses one of the CA modules for decoding the desired programs/information.

If a digital video recorder is connected to the bus, the digital television system according to the invention has the advantage that the video recorder is capable of communication with the CA module or each CA module that is connected to the bus.

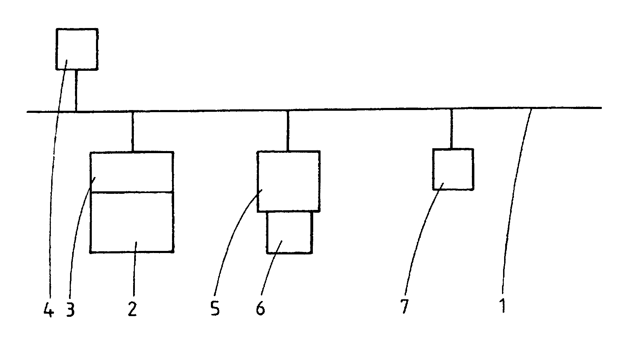

The invention will be explained in more detail hereafter with reference to the drawing, which is a very diagrammatic representation of an embodiment of the digital television system.

A television 2 comprising a decoder 3 is connected to a bus 1, wherein the digital television signals originate from a satellite receiver 4, which is likewise connected to bus 1. Satellite receiver 4 is one example of a signal source; other examples are a cable connection, an antenna connection, a digital video recorder or the like.

Certain channels may be used by suppliers of pay television or other services which use encoded signals, which can only be received by subscribers to whom the required keys are available. The decoding of the encoded signals takes place in a usual manner by means of a CA module 5, which cooperates with a smart card 6, for example, wherein the keys are stored in the smart card 6. In the illustrated system the CA module is connected to bus 1, so that the communication between the decoder 3 and the CA module 5 takes place via bus 1 in the protocol that is being used. The advantage of this is that the television 2 or the decoder 3 need not be provided with a special connector for connecting the CA module. Furthermore, the system described herein is highly flexible, because two or more CA modules can be connected to bus 1, wherein decoder 3 cooperates with that CA module which is needed for decoding the channel that the user has selected.

Furthermore it is possible with the system described herein that a digital video recorder 7 connected to bus 1 makes use of the same CA module 5 as television 2.

In the embodiment described herein the decoder 3 is built into the television 2. It is also possible, however, to use a separate decoder 3, which may be fitted between television 2 and bus 1, or which is capable of communication with television 2 via bus 1. In the latter case is is also possible, if desired, to use the decoder 3 as a decoder for digital video recorder 7.

It is noted that all devices connected to bus 1 are provided with a suitable interface, which converts the signals of the device in question into the protocol that has been selected for communication via the bus, protocol P1394, for example, or vice versa.

The invention is not limited to the above-described embodiment, which can be varied in several ways within the scope of the invention.

## Claims

1. A digital television system comprising a bus (1), a television set (2) connected to said bus (1), a decoder (3), a signal source (4) connected to said bus, and a Conditional Access module (5), connected to said bus (1), **characterized in that** the bus (1) is a communication network bus, and **in that** the communication between the signal source (4), the Conditional Access module (5) and the television set (2) or the decoder (3) takes place via said bus (1) according to a certain protocol.

2. A television system according to claim 1, wherein two or more Conditional Access modules (5) are connected to said bus (1).

3. A television system according to claim 1 or 2, wherein a digital video recorder (7) is connected to the bus (1), wherein said video recorder (7) is capable of communication with the Conditional Access module (5) or with each Conditional Access module (5) that is connected to the bus (1).

4. A television system according to any one of the preceding claims, wherein said decoder (3) is connected to said bus (1), and wherein the communication between the decoder (3) and the television set (1) or the video recorder (7) takes place via said bus (1).

## Patentansprüche

1. Digitales Fernsehsystem, das einen Bus (1), ein Fernsehgerät (2), das mit dem Bus (1) verbunden ist, einen Decoder (3), eine Signalquelle (4), die mit dem Bus verbunden ist, und ein Zugangsberechtigungsmodul (5) umfasst, das mit dem Bus (1) verbunden ist, **dadurch gekennzeichnet, dass** der Bus (1) ein Kommunikationsnetz-Bus ist, und dadurch, dass die Kommunikation zwischen der Signalquelle (4), dem Zugangsberechtigungsmodul (5) und dem Fernsehgerät (2) oder dem Decoder (3) entsprechend einem bestimmten Protokoll über den Bus (1) stattfindet.

2. Fernsehsystem nach Anspruch 1, wobei zwei oder mehr Zugangsberechtigungsmodule (5) mit dem Bus (1) verbunden sind.

3. Fernsehsystem nach Anspruch 1 oder 2, wobei ein digitaler Videorecorder (7) mit dem Bus (1) verbunden ist und der Videorecorder (7) zur Kommunikation mit dem Zugangsberechtigungsmodul (5) bzw. mit jedem Zugangsberechtigungsmodul (5), das mit dem Bus (1) verbunden ist, befähigt ist.

4. Fernsehsystem nach einem der vorangehenden Ansprüche, wobei der Decoder (3) mit dem Bus (1) verbunden ist und die Kommunikation zwischen dem Decoder (3) und dem Fernsehgerät (1) oder dem Videorecorder (7) über den Bus (1) stattfindet.

## Revendications

1. Système de télévision numérique comprenant un bus (1), un appareil de télévision (2) connecté audit bus (1), un décodeur (3), une source de signaux (4) connectée audit bus, un module d'accès conditionnel (5) connecté audit bus (1),
**caractérisé en ce que**,
le bus (1) est un bus de réseau de communication et **en ce que** la communication entre la source de signaux (4), le module d'accès conditionnel (5) et l'appareil de télévision (2) ou le décodeur (3) s'effectue par le biais dudit bus (1) selon un certain protocole.

2. Système de télévision selon la revendication 1, dans lequel deux ou plus de deux modules d'accès conditionnel (5) sont connectés audit bus (1).

3. Système de télévision selon la revendication 1 ou 2, dans lequel un magnétoscope numérique (7) est raccordé au bus (1), dans lequel ledit magnétoscope (7) est apte à communiquer avec le module d'accès conditionnel (5) ou avec chaque module d'accès conditionnel (5) qui est connecté au bus (1).

4. Système de télévision selon l'une quelconque des revendications précédentes, dans lequel ledit décodeur (3) est connecté audit bus (1) et dans lequel la communication entre le décodeur (3) et l'appareil de télévision (2) ou le magnétoscope (7) s'effectue par le biais du bus (1).
